# EUROPEAN PATENT SPECIFICATION

(11) **EP 0 645 430 B1**
(45) Date of publication and mention of the grant of the patent: **26.05.1999**
(21) Application number: 94115022.9
(22) Date of filing: 23.09.1994
(51) Int. Cl.: C08L 33/06, C08L 25/02, C08L 23/02

(54) **Thermoplastic resin composition**
Thermoplastische Kunstharzzusammensetzung
Composition résineux thermoplastique

(30) Priority: 24.09.1993 JP 261482/93; 24.09.1993 JP 261483/93; 29.10.1993 JP 293941/93; 21.12.1993 JP 346138/93
(43) Date of publication of application: 29.03.1995
(73) Proprietor: DAI-ICHI KOGYO SEIYAKU CO., LTD., Shimogyo-ku Kyoto (JP)
(72) Inventor: Sumi, Hideyuki, Higashisumiyoshi-ku, Osaka (JP); Nakayama, Yutaka, Kita-ku, Kyoto (JP); Hotta, Hiroshi, Nishikyo-ku, Kyoto (JP)
(74) Representative: Strehl Schübel-Hopf & Partner

(56) References cited:
- EP-A- 0 276 111
- DATABASE WPI Section Ch, Week 9235 Derwent Publications Ltd., London, GB; Class A14, AN 92-289040 XP002003755 & JP-A-04 198 307 (DAIICHI) , 17 July 1992
- PATENT ABSTRACTS OF JAPAN vol. 018, no. 097 & JP-A-05 295229 (DAI ICHI)
- DATABASE WPI Week 9111 Derwent Publications Ltd., London, GB; AN 88-017954 XP002003756 & JP-A-62 280 248 (KOKOKU CHEM IND) , 5 December 1987
- DATABASE WPI Section Ch, Week 9349 Derwent Publications Ltd., London, GB; Class A14, AN 93-392870 XP002003757 & JP-A-05 295 244 (DAIICHI KOGYO SEIYAKU CO LTD) , 9 November 1993
- DATABASE WPI Section Ch, Week 9137 Derwent Publications Ltd., London, GB; Class A82, AN 91-270326 XP002003758 & JP-A-03 177 464 (TOKYO THREE BOND KK) , 1 August 1991
- DATABASE WPI Section Ch, Week 9349 Derwent Publications Ltd., London, GB; Class A13, AN 93-392857 XP002003759 & JP-A-05 295 229 (DAIICHI KOGYO SEIYAKU CO LTD) , 9 November 1993
- DATABASE WPI Section Ch, Week 9211 Derwent Publications Ltd., London, GB; Class A17, AN 92-085301 XP002003760 & JP-A-04 028 733 (KURARAY KK) , 31 January 1992

## Description

### BACKGROUND OF THE INVENTION

### Field of the Invention

This invention relates to a thermoplastic resin composition suitable for the manufacture of household electrical appliance components, particularly three-dimensional components such as housings and cases, and provides for permanent antistatic and high water resistance, abrasion resistance and other physical properties.

### Description of the Prior Art

Thermoplastic resins are in broad use as packaging materials and molding materials for the production of lighting devices, household electrical appliance parts, instrument covers and so on. However, shaped articles molded from thermoplastic resins such as (meth)acrylate resins, polystyrenic resins, polyolefins, etc. are generally high in electric resistance and have the serious drawback that they are easily charged on friction to attract dust.

Therefore, the following technologies have recently been developed for imparting antistatic properties to these thermoplastic resins.
(1) Coating the resin surface with an antistatic composition and drying;
(2) Compounding an internal additive-type antistatic agent into the resin;
(3) Coating the resin surface with a silicone compound;
(4) Modifying the resin itself.

Referring to the above technology (1) wherein a surfactant solution is used as the antistatic agent, the antistatic agent is easily dislodged from the resin surface on repeated cleaning or friction, thus failing to insure a permanent antistatic effect.

In accordance with technology (2), glycerol fatty acid esters, sorbitan fatty acid esters, alkyldiethanolamines, sodium salts of alkylbenzenesulfonates, quaternary salts of alkylimidazoles, etc. are generally used as internal additive-type antistatic agents. The rationale is that even if the antistatic agent on the resin surface is removed on repeated cleaning, the internal additive-type antistatic agent in the depth of the resin bleeds out onto the resin surface so that a comparatively long-lasting antistatic effect can be expected.

However, it takes a fairly long time for restoration of the antistatic performance and when an excess of the internal antistatic agent bleeds out, the resin surface becomes sticky to attract dust more easily. Moreover, as the surface becomes tacky or "dusted" with the precipitated antistatic agent, the printability and appearance of the resin surface are adversely affected.

Furthermore, since these antistatic agents are low molecular weight compounds, they are vaporized by the heat of molding at high temperature. This means not only an economic disadvantage, for the antistatic agent must be used in more than the necessary amount, but also the difficulty to insure a controlled effective concentration of the antistatic agent.

As new internal additive-type antistatic agents overcoming the above-mentioned disadvantages of the earlier agents, high molecular weight compounds having antistatic groups such as a modified methyl methacrylate polymer prepared by modifying 20-80 mol % of the available methoxy groups with diethanolamine (JP Kokai H-1-170603), alkoxy-polyethylene glycol methacrylate graft copolymers (JP Publication S-58-39860), a cationic polymer obtainable by imidating a styrene-maleic anhydride copolymer and quaternizing the thus-modified copolymer (JP Publication H-1-29820), a comb-shaped copolymer consisting of a high molecular weight monomeric unit prepared by converting the terminal carboxyl groups of poly(methyl methacrylate) to methacroyl groups with glycidyl methacrylate and an aminoalkyl acrylate or acrylamide unit, and a quaternized cationic version thereof (JP Kokai S-62-121717), among others, have been proposed in recent years.

It has also been disclosed in the literature that an antistatic film can be produced by formulating an ethylene-acryloylaminoalkyl trialkylammonium salt copolymer (mol ratio 65-99/1-35) or an ethyleneacryloylaminoalkyl trialkylammonium salt-acrylic ester copolymer (mol ratio 65-99/1-35/0-15) with a thermoplastic resin such as polyethylene, polypropylene, polyester, polyamide, etc. (JP Kokai H-5-5066).

Molding compositions containing any of these internal additive-type antistatic agents are more or less useful when they are formed into films or sheets but when they are applied to the fabrication of three-dimensional articles such as cases and housings, the resulting products are not satisfactory in water resistance, abrasion resistance, impact strength and other mechanical properties. Moreover, the clarity of moldings tended to be decreased.

JP Kokai H-5-78543 proposes addition of an electrolyte to a polyethylene glycol derivative of a certain defined composition for the production of a transparent permanent antistatic agent but resin compositions containing this agent are not satisfactory in durability and heat resistance and, therefore, not of practical value.

While the technology (3) provides for a resin composition with a semi-permanent antistatic property but the required silione compound is so expensive and the processing efficiency is so low that this technology is very disadvantageous costwise.

The technology (4), which comprises introducing hydrophilic groups into the resin, requires a large number of hydrophilic groups in order to insure a sufficient antistatic property. However, when such a large number of hydrophilic groups is introduced, the non-hygroscopic property and mechanical properties of the resin are sacrificed.

Thus, the conventional thermoplastic resin compositions claimed to be antistatic are not fully satisfactory in antistatic performance or its life, water resistance and mechanical properties.

### OBJECT OF THE INVENTION

Having been developed a means to overcome the above-mentioned disadvantages of the prior art, this invention has for its object to provide a thermoplastic resin composition capable of providing three-dimensional articles having excellent water resistance, mechanical strength and other physical properties in addition to permanent antistatic property.

### SUMMARY OF THE INVENTION

The thermoplastic resin composition of this invention is a resin composition obtained by using a (meth)acrylate resin as the matrix resin and adding the following cationic copolymer to the matrix resin.

Thus, the (meth)acrylate resin composition according to this invention comprises
(A) a (meth)acrylate resin and
(B) a cationic copolymer comprising a linear arrangement of 80-98 mol % of an ethylene unit of formula (I) and 2-20 mol % of an acrylamide unit of formula (III) and having a weight average molecular weight of 1,000-50,000.

   ⁅CH₂-CH₂⁆ (I)

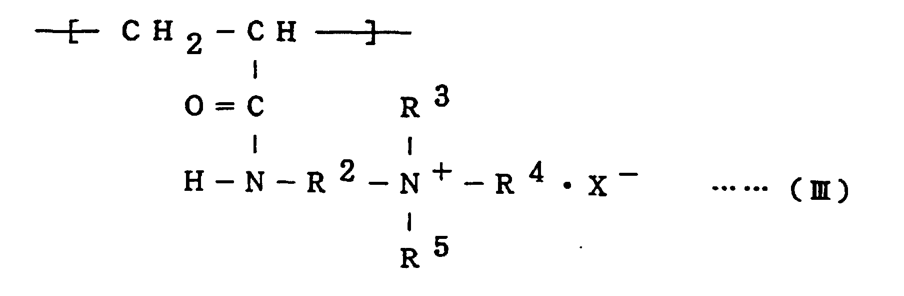

   (wherein R² represents an ethylene group or a propylene group; R³ and R⁴ each represents a methyl group; R⁵ represents a C₁₋₈ straight-chain alkyl or aralkyl (arylalkyl) group; X⁻ represents a halide ion, CH₃OSO₃⁻ or CH₃CH₂OSO₃⁻; R² may be the same or different in different occurences of the unit in the copolymer)

In another aspect, the (meth)acrylic resin composition of this invention comprises
(A) a (meth)acrylate resin and
(B) a cationic copolymer comprising a linear arrangement of 80-98 mol % of an ethylene unit of formula (I), not more than 15 mol % (exclusive of 0%) of an acrylate unit of formula (II) and 2-20 mol % of an acrylamide unit of formula (III) and having a weight average molecular weight of 1,000-50,000.

   ⁅CH₂-CH₂⁆ (I)

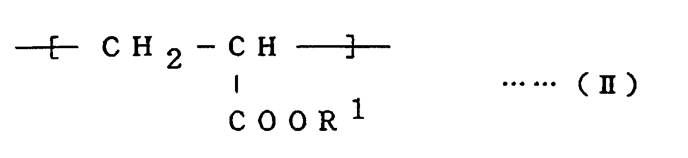

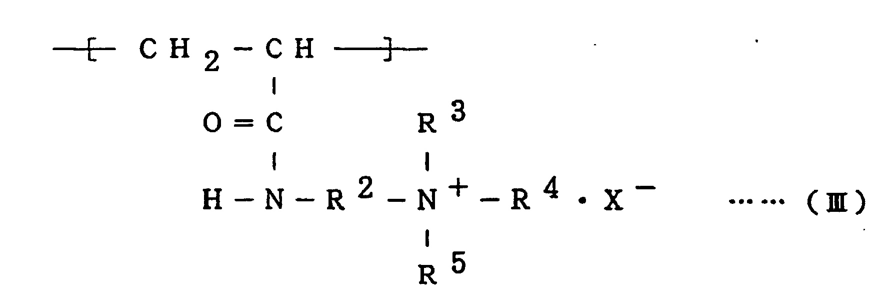

   (wherein R¹ represents a methyl group or an ethyl group; R² represents an ethylene group or a propylene group; R³ and R⁴ each represents a methyl group; R⁵ represents a C₁₋₈ straight-chain alkyl or aralkyl (arylalkyl) group; X⁻ represents a halide ion, CH₃OSO₃⁻ or CH₃CH₂OSO₃⁻; R¹ and R² may each be the same or different with different occurrences of the unit in the copolymer.)

The respective structural units (I)-(III) may occur regularly or irregularly in the copolymer.

### Matrix resin (A)

In the resin compositions of this invention, a (meth)acrylate resin is used as the matrix resin (A). However, the kinds of matrix resins are not particularly critical.

The (meth)acrylate resin includes homopolymers and copolymers of alkyl (e.g. methyl, ethyl, propyl, butyl, etc.) esters of acrylic or methacrylic acid, such as poly(methyl methacrylate), poly(ethyl methacrylate), poly(propyl methacrylate), poly(butyl methacrylate), poly(methyl acrylate), poly(ethyl acrylate), methyl methacrylate-methyl acrylate copolymer, methyl methacrylate-ethyl methacrylate copolymer, methyl methacrylate-butyl methacrylate copolymer, methyl methacrylate-ethyl acrylate copolymer, etc. These (meth)acrylate polymers can be used singly or in combination.

There is no limitation on the production method for such polymers, either. Thus, the known suspension polymerization, emulsion polymerization and bulk polymerization techniques can be mentioned.

The weight average molecular weight of the (meth)acrylate resin need not be critically controlled but is preferably in the range of 10,000 to 500,000 and, for still better results, 20,000-300,000.

### Cationic copolymer (B)

The structure of cationic copolymer (B) for use in the resin composition of this invention is now described in detail.

In the molecule of cationic copolymer (B) for use in this invention, the ethylene unit of general formula (I) accounts for 80-98 mol %. If the proportion of ethylene unit (I) is less than 80 mol %, the copolymer is not sufficiently compatible with the matrix resin (A) so that the water resistence and mechanical properties of moldings are considerably sacrificed. On the other hand, if the proportion of unit (I) exceeds 98 mol %, no sufficient antistatic property can be obtained. In view of these conflicting compatibility and antistatic performance requirements, the preferred range for ethylene unit (I) is 85-97.5 mol %.

The acrylate unit of general formula (II) occurs in a proportion of 0-15 mol % within the molecule. The presence of this acrylate unit (II) results in enhanced compatibility between matrix resin (A) and cationic copolymer (B).

If the proportion of acrylate unit (II) exceeds 15 mol %, the mechanical properties of moldings are adversely affected. From the standpoint of compatibility, the proportion of acrylate unit (II) is preferably about 0.0001-13 mol %, more preferably about 1-13 mol % and, for still better results, about 3-13 mol %.

R¹ in general formula (II) represents a methyl group or an ethyl group and may be the same or different with different occurrences of the unit (that is to say both methyl and ethyl groups may occur within the same molecule.)

The acrylamide unit of general formula (III) is a cationic unit in the form of quaternary ammonium salt and occurs in a proportion of 2-20 mol % within the molecule.

If its proportion is less than 2 mol %, the antistatic property of the resin composition is poor. If it exceeds 20 mol %, the compatibility of cationic copolymer (B) with matrix resin (A) is adversely affected. From the standpoint of antistatic performance and compatibility, the preferred range for acrylamide unit (III) is 2.5-15 mol %.

Referring to general formula (III), R² represents an ethylene group or a propylene group. Both of these groups may occur within the same molecule. R³ and R⁴ each represents a methyl group. For the ease of production and the satisfactory antistatic property that can be obtained, R⁵ is a lower (C₁₋₈) straight-chain alkyl group such as methyl, ethyl or an aralkyl group such as benzyl. X⁻ represents a halide ion, e.g. Cl⁻, Br⁻ and I⁻, and CH₃OSO₃⁻ or CH₃CH₂OSO₃⁻.

The weight average molecular weight as mentioned for the cationic copolymer (B) described above in this specification is the weight average molecular weight on a polystyrene equivalent basis as determined by gel permeation chromatography and for this determination, the super-high temperature GPC method [Kinukawa, Kobunshi Ronbunshu Vol. 44, Issue 2, pp. 139-141, 1987] can be utilized. The weight average molecular weight of cationic copolymer (B) should be within the range of 1,000-50,000. If the weight average molecular weight is less than 1,000, the cationic copolymer (B) becomes wax-like to interfere with handling and bleeds out excessively to tackify the resin surface. If the weight average molecular weight exceeds 50,000, the compatibility of the copolymer with matrix resin (A) is adversely affected. The preferred range for the weight average molecular weight of said copolymer (B) is 3,000-30,000.

The cationic copolymer (B) for use in the resin composition of this invention can be produced by, inter alia, a process which comprises subjecting an ethylene-acrylic acid copolymer, obtained by copolymerizing ethylene with an acrylate ester by the high pressure polymerization method, to concurrent hydrolysis and thermal degradation by the technique described in JP Kokai S-60-79008, amidating the resulting ethylene-acrylate-acrylic acid copolymer with an N,N-dialkylaminoalkylamine, cationizing this amidation product with a known quaternizing agent, and isolating the cationic copolymer (B) from the reaction mixture, although this is not an exclusive production process.

In the production of the resin composition of this invention, the practical level of addition of cationic copolymer (B) to the matrix resin (A) is 3-30 weight %. If the level of addition is below 3 weight %, the desired antistatic property may not be easily obtained. Conversely if the level of addition exceeds 30 weight %, the mechanical properties, particularly impact strength, of the resin are adversely affected.

To strike a balance between antistatic and mechanical properties of the resin composition, the level of addition of cationic copolymer (B) to matrix resin (A) is preferably in the range of 5-30 weight %.

Regarding the method for producing the resin composition of this invention, the cationic copolymer (B) is added at the specified level to the matrix resin (A) by a known procedure, for example employing a biaxial extruder.

Where necessary, a heat stabilizer and/or a weathering agent is incorporated in the resin composition of this invention.

The heat stabilizer that can be used includes phosphorus series stabilizers such as tetrakis(2,4-di-t-butylphenyl)-4,4'-biphenylene diphosphonate, distearylpentaerithritol disphosphite, tris(2,4-di-t-butylphenyl) phosphite and 3,4,5,6-dibenzo-1,2-oxaphosphan-2-oxide, phenolic stabilizers such as tetrakis-(methylene-3(3,5-di-t-butyl-4-hydroxyphenyl) propionate]-methane, 2,6-di-t-butyl-4-methylphenol and 2-t-butyl-4-methoxyphenol, and sulfur-containing stabilizers such as mercaptopropionic esters. Particularly preferred are phosphorus series stabilizers.

The weathering agent that can be used include ultraviolet absorbers and light stabilizers. Specifically this type of agent includes triazole series UV absorbers such as 2-(2'-hydroxy-3',5'-di-t-butylphenyl)-5-chlorobenzotriazole, 2-(2'-hydroxy-3',5'-di-t-amylphenyl)benzotriazole, 2,2'-methylenebis[4-(1,1,3,3-tetramethylbutyl)-6-(2-N-benzotriazol-2-yl)phenol], 2-(2'-hydroxy-5'-methylphenyl)benzotriazole, 2-(2'-hydroxy-3',5'-dicumylphenyl)phenylbenzotriazole and 2-(2'-hydroxy-5'-t-octylphenyl)benzotriazole, and hindered amine type light stabilizers such as bis(2,2,6,6-tetramethyl-4-piperazinyl) sebacate and poly[[6-(1,1,3,3-tetramethylbutylimino)-1,3,5-triazine-2,4-diyl]-[4-(2,2,6,6-tetramethylpiperidinyl)imino]-[4-(2,2,6,6-tetramethylpiperidinyl)imine]]. Particularly effective are triazole series compounds and, among them, 2,2'-methylenebis[4-(1,1,3,3-tetramethylbutyl)-6-(2N-benzotriazol-2-yl)phenol] is especially useful for insuring both weather resistance and transparency.

The above-mentioned heat stabilizer and/or weathering agent is preferably incorporated in a proportion of 0.01-2.0 parts by weight to 100 parts by weight of matrix resin (A).

Aside from the foregoing, nonionic or cationic surfactants, polyoxyethylene chain-containing polymers, such as high molecular compounds obtainable by the polycondensation of polyoxyethene or polyethylene glycol through ester, amide or imide linkages and high molecular compounds obtainable by the addition-polymerization of the same through urethane, epoxy-ester or epoxy-ether linkages, among other antistatic agents, can be concurrently added within the range not exceeding the level of addition of the cationic copolymer (B) according to this invention.

Furthermore, inorganic fillers such as calcium carbonate, talc or glass fiber, bromine-containing flame retardants such as hexabromocyclododecane, tetrabromobisphenol A and its derivatives and diphenyl ether bromide, phosphorus-containing flame retardants, and auxiliary anticombustion agents such as Sb₂O₃ can also be concurrently incorporated.

The cationic copolymer (B) in the resin composition of this invention forms a continuous phase in matrix resin (A) and static leaks occur due to the movement of electric charge associated with the shift of the ion pairs of the cationic groups in the copolymer (B) molecule. Therefore, compared with the conventional internal additive-type antistatic agents which cause leakage of the generated static electricity through the hygroscopic layer which they form on the resin surface on bleeding, the cationic copolymer (B) of this invention provides for a faster leakage of static electricity.

Furthermore, since, in the resin composition of this invention, the cationic copolymer (B) is not distributed in a high concentration near the resin surface which is susceptible to extrinsic factors, the following multi-faceted and remarkable effects are obtained.
(1) The resin composition of this invention is free from the attrition of antistatic property due to surface friction, washing with water, etc., thus being a meritorious resin composition providing for permanent antistatic property. Furthermore, even under rugged conditions which would nullify the effect of the conventional antistatic agents (e.g. high-temperature molding), the resin composition of this invention retains a high level of antistatic effect.
(2) The resin composition of this invention is free from the problems associated with the conventional internal additive-type antistatic agents such as the surface tackiness due to their excessive bleed-out and the consequent readiness of the resin to pick up dust.
(3) By formulating said matrix resin (A), with said cationic copolymer (B) and molding the resulting composition, it is not only possible to impart a permanent antistatic property to shaped articles of (meth)acrylic resin, polystyrenic resin or polyolefinic resin but also possible to enhance the abrasion resistance of the shaped articles. Thus, on said matrix resin (A), the cationic copolymer (B) acts as an abrasion resistance improving agent providing an antistatic effect as well. This action develops prominently when the proportion of the cationic copolymer is 3-30 weight % with respect to the matrix resin.
(4) In addition, by formulating said matrix resin (A) with cationic copolymer (B) and molding the resulting composition, it is not only possible to impart a permanent antistatic property to shaped articles of (meth)acrylic resin but also possible to improve the impact strength of the shaped articles. Thus, the cationic copolymer (B) acts as an impact strength improving agent providing an antistatic effect as well on said matrix resin (A). This action develops prominently when the proportion of the cationic copolymer is 3-30 weight % with respect to the matrix resin.
(5) In addition, by formulating said matrix resin (A) with said cationic copolymer (B) and molding the resulting composition, it is not only possible to impart a permanent antistatic property to shaped articles of (meth)acrylate resin but also possible to enhance the water resistance of the shaped articles. Thus, on matrix resin (A), the cationic copolymer (B) acts as a water resistance improving agent providing an antistatic property as well. This action develops prominently when the proportion of the cationic copolymer is 3-30 weight % with respect to the matrix resin.
(6) Even when the resin composition of this invention is molded into three-dimensional articles such as cases and housings, these shaped articles show excellent impact resistance, abrasion resistance, strength, elongation and water resistance.
(7) The shaped articles obtained from the resin composition of this invention fully retain the clarity of the matrix resin itself. Thus, by using the resin composition of this invention, shaped articles having both permanent antistatic property and clarity can be manufactured.
   Regarding the clarity mentioned above, the cationic copolymer (B) has a refractive index of about 1.47-1.52, which is very close to that of (meth)acrylate resin, with the result that the resin composition has a high degree of clarity. For reference, the refractive indices of methyl methacrylate, ethyl methacrylate, i-propyl methacrylate and tert-butyl methacrylate are 1.489, 1.485, 1.4728, and 1.4638, respectively.
(8) By using a heat stabilizer and a weathering agent as additives, still higher thermal stability and weather resistance can be ensured in addition to satisfactory antistatic property.

### EXAMPLES

Specific examples of synthesis of the cationic copolymer (B) for use in this invention are now described.

### Example of synthesis (B-1) of cationic copolymer (B)

A 4-necked flask of 1 ℓ capacity, equipped with a thermometer, stirrer, drip funnel and Dean-Stark trap, was charged with 400 ml of xylene, 150 g of ethylene-ethyl acrylate-acrylic acid copolymer (ethylene/ethyl acrylate/acrylic acid = 93/3/4) and 1.0 g of p-toluenesulfonic acid.

The flask was further charged with 21.1 g of N,N-dimethylaminopropylamine and heated in an oil bath at 140°C. With the byproduct water being distilled off azeotropically with xylene, the reaction was continued for 17 hours. Thereafter, the amidation reaction was further continued until the azeotrope showed no water.

The reaction mixture, 458 g, was cooled to 80°C and 31.1 g of diethyl sulfate was added dropwise through the drip funnel over a period of 1 hour. Since the evolution of heat occurred in this process, the reaction temperature was maintained at 90°C by cooling. After completion of the dropwise addition, a thermal aging reaction was conducted at 100°C for 4 hours.

This reaction mixture was poured in a large quantity of methanol and the resulting precipitate was recovered and dried to provide a cationic copolymer (B-1). The weight average molecular weight of this copolymer (B-1) was found to be 5,300.

### Example of synthesis (B-2) of cationic copolymer (B)

A 4-necked flask of 1 ℓ capacity, equipped with a thermometer, stirrer, drip funnel and Dean-Stark trap, was charged with 400 ml of xylene, 150 g of ethylene-acrylic acid copolymer (ethylene/acrylic acid = 91/9) and 1.0 g of p-toluenesulfonic acid.

The flask was further charged with 38.5 g of N,N-dimethylaminoethylamine and heated in an oil bath at 140°C. With the byproduct water being distilled off azeotropically with xylene, the reaction was continued for 17 hours. Thereafter, the amidation reaction was further continued until the azeotrope showed no water.

The reaction mixture was then cooled to 80°C and 72.0 g of methyl iodide was added dropwise over a period of 1 hour. Since the evolution of heat occurred in this process, the reaction temperature was maintained at 90°C by cooling. After completion of the dropwise addition, a thermal aging reaction was conducted at 100°C for 4 hours.

This reaction mixture was poured in a large quantity of n-hexane and the resulting precipitate was recovered and dried to provide a cationic copolymer (B-2). The weight average molecular weight of this copolymer (B-2) was found to be 22,000.

### Example of synthesis (B-3) of cationic copolymer (B)

A 4-necked flask of 1 ℓ capacity, equipped with a thermometer, stirrer, drip funnel and Dean-Stark trap, was charged with 400 ml of xylene, 150 g of ethylene-ethyl acrylate-acrylic acid copolymer (ethylene/ethyl acrylate/acrylic acid = 93/3/4) and 1.0 g of p-toluenesulfonic acid.

The flask was further charged with 21.1 g of N,N-dimethylaminopropylamine and heated in an oil bath at 140°C. With the byproduct water being distilled off azeotropically with xylene, the reaction was continued for 17 hours. Thereafter, the amidation reaction was further continued until the azeotrope showed no water.

The reaction mixture, 458 g, was cooled to 80°C and 25.5 g of benzyl chloride was added dropwise through the drip funnel over a period of 1 hour. Since the evolution of heat occurred in this process, the reaction temperature was maintained at 90°C by cooling. After completion of the dropwise addition, a thermal aging reaction was conducted at 100°C for 4 hours.

This reaction mixture was poured in a large quantity of methanol and the resulting precipitate was recovered and dried to provide a cationic copolymer (B-3). The weight average molecular weight of this copolymer (B-3) was found to be 5,500.

### Comparative Example of synthesis (B-4)

A 4-necked flask of 1 ℓ capacity, equipped with a thermometer, stirrer, drip funnel and Dean-Stark trap, was charged with 400 ml of xylene, 150 g of ethylene-ethyl acrylate-acrylic acid copolymer (ethylene/ethyl acrylate/acrylic acid = 65/5/30) and 1.0 g of p-toluenesulfonic acid.

The flask was further charged with 105.6 g of N,N-dimethylaminoethylamine and heated in an oil bath at 140°C. With the byproduct water being distilled off azeotropically with xylene, the reaction was continued for 17 hours. Thereafter, the amidation reaction was further continued until the azeotrope showed no water.

The reaction mixture was then cooled to 80°C and 170.4 g of methyl iodide was added dropwise over a period of 1 hour. Since the evolution of heat occurred in this process, the reaction temperature was maintained at 90°C by cooling. After completion of the dropwise addition, a thermal aging reaction was conducted at 100°C for 4 hours.

This reaction mixture was poured in a large quantity of n-hexane and the resulting precipitate was recovered and dried to provide a cationic copolymer (B-4). The weight average molecular weight of this copolymer (B-4) was found to be 8,600.

### Examples 1-12 (production of (meth)acrylate resin compositions)

Using a biaxial extruder equipped with quantitative feeders (KRC Kneader S-II, Kurimoto Ltd.), the (meth)acrylate resin (A) shown in Table 1 and the cationic copolymer [(B-1)∼(B-3)] obtained in the foregoing examples of synthesis were kneaded together in the ratios indicated in Table 1 and extruded, and the extrudate was cut cold to provide a pelletized composition.

Using an injection machine (Hypershot 3000, Niigata Engineering Co., Ltd.), the pelletized composition was injection-molded into testpieces (flat plates measuring 60 x 60 x 3 mm and 50 x 50 x 1 mm, respectively, and JIS K-7110 No. 2 A testpieces).

Using these testpieces, the physical tests (1)-(6) described below were performed. The results are shown in Table 1.

### Comparative Examples 1-8

Testpieces of resin compositions were prepared in the same manner as the foregoing examples except that lauryldiethanolamine or polyetheresteramide, in lieu of cationic copolymer [(B-1)∼(B-3)], was formulated in the ratios shown in Table 2 or the matrix resin alone was used. Using these testpieces, the physical properties were determined. The results are shown in Table 2.

The test parameters and evaluation methods were as follows.

### (1) Antistatic property

The antistatic property was evaluated in terms of surface resistivity.

To find the surface resistivity, a voltage of 500 V was applied to the specimen and the resistance was measured with Megaohm Meter (Toa Dempa Co., Ltd.).

### (2) Charge attenuation rate

Using Static Honestmeter (Shishido Shokai Co.), a voltage of 10,000 V was applied to the testpiece for 30 seconds and the time to one-half of the initial voltage value was determined and expressed in seconds.

### (3) Abrasion resistance

The testpiece was rubbed 80 times with water-soaked gauze and the surface resistivity was measured by the method described above in (1).

### (4) Water resistance

The testpiece was heated in boiling water for 2 hours. After drying, the surface resistivity was measured in the same manner as (1).

### (5) Clarity

The clarity was evaluated in terms of haze.

Using the 50 x 50 x 1 mm testpiece, the haze was measured with a haze meter (Nippon Denshoku Kogyo Co., Ltd.).

### (6) Izod impact strength

The Izod impact strength of each testpiece was measured in accordance with JIS K-7110.

The above electrical characteristics (1) through (4) were determined after not less than 24 hours of conditioning at 20°C and 60% R.H.

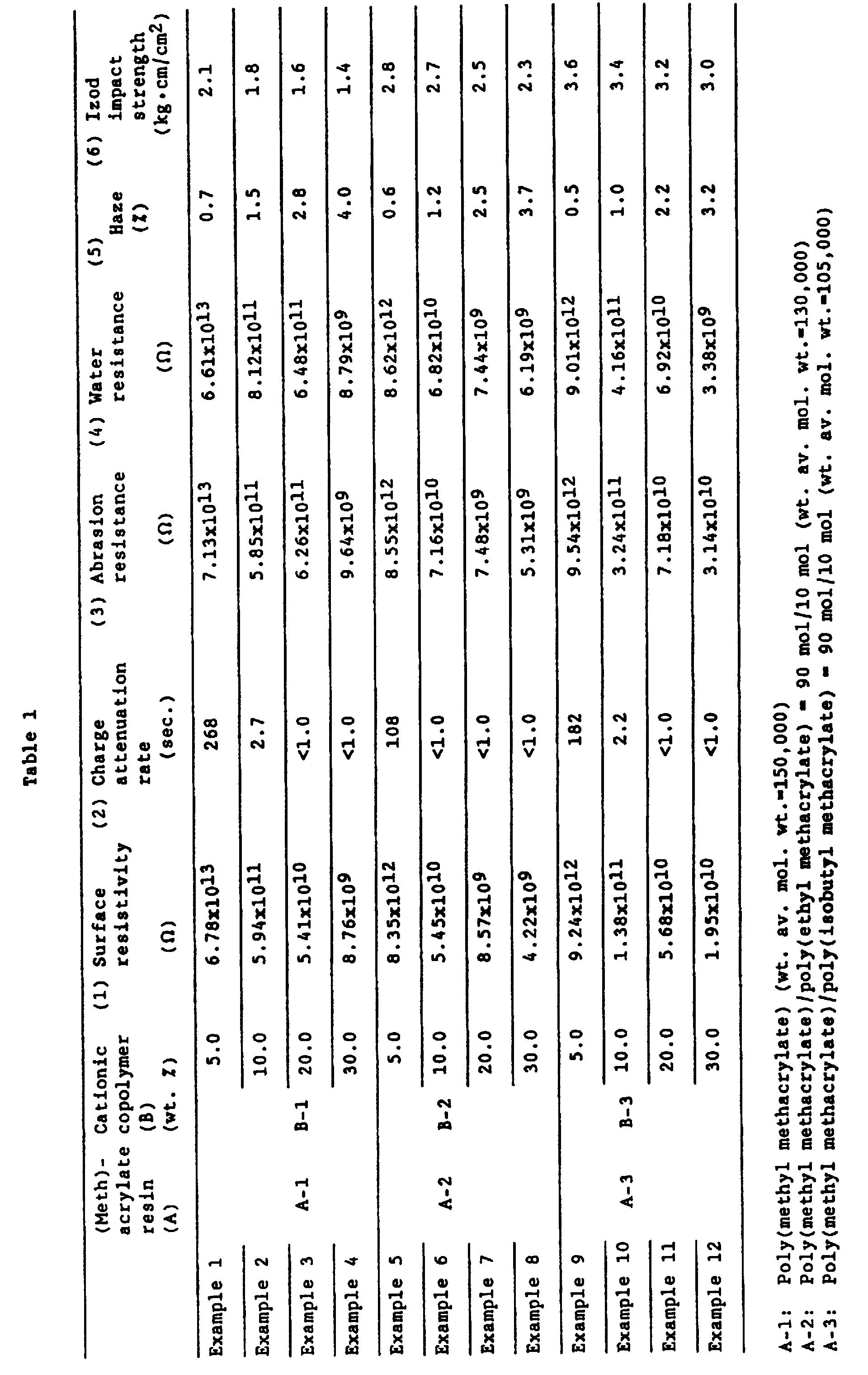

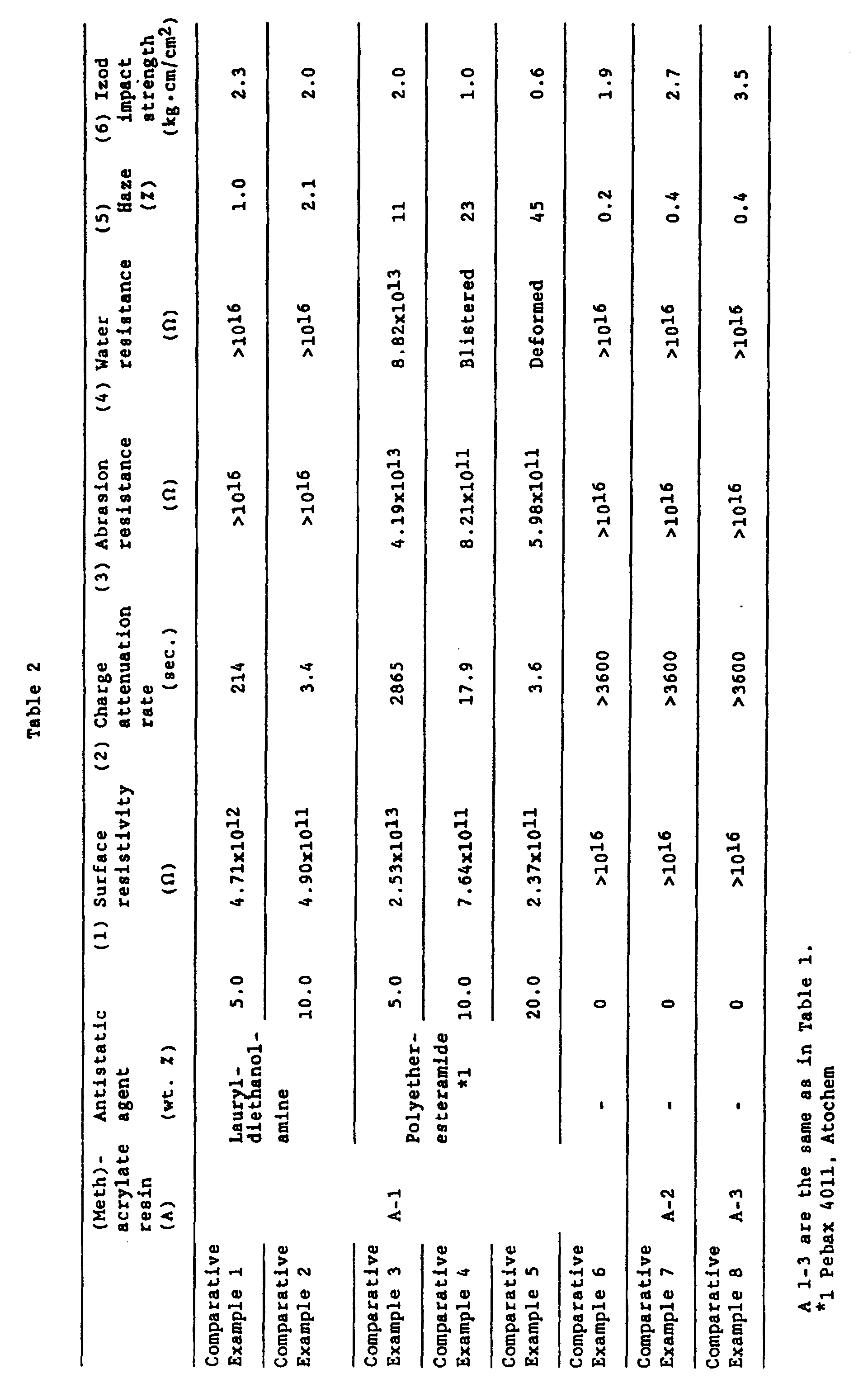

It can be seen from Tables 1 and 2 that the (meth)acrylate resin compositions obtainable by formulating a (meth)acrylate resin with a cationic copolymer [(B-1)∼(B-3)] are superior in antistatic property, abrasion resistance, water resistance, clarity and impact strength.

When an antistatic agent other than said cationic copolymer [(B-1)∼(B-3)] was added to the matrix resin, the surface resistivity of the resin was not much different but the mechanical properties such as abrasion resistance and impact strength were considerably sacrificed.

### Examples 13-19

Pelletized compositions and testpieces were prepared in the same manner as the foregoing examples except that poly(methyl methacrylate) [weight average molecular weight 150,000] for matrix resin (A), the cationic copolymers [(B-1)∼(B-3)] prepared in the foregoing examples of synthesis and the heat stabilizers and weathering agents mentioned in Table 3 were employed.

Using these testpieces, the antistatic test (1) and the following weatherability test [(7) below] were carried out. The results are shown in Table 4.

### (7) Weatherability

Using a weather-o-meter (Suga Testing Apparatus Co., Ltd.), a 2 mm-thick plate specimen prepared by injection molding was subjected to a 500-hour accelerated exposure test and the degree of yellowing (ΔYI) due to the exposure was determined using an additive-free resin specimen as control in accordance with JIS K7103. In addition, the total light transmission values (%) before and after the exposure test were determined in accordance with JIS K7105.

The heat stabilizers and weathering agents used are shown below.

### Heat stabilizers

Sandstab P-EPQ (Sandoz): tetrakis(2,4-di-t-butylphenyl)-4,4'-biphenylene diphosphonate
Adekastab PEP-8 (Asahi Denka Kogyo K.K.): distearylpentaerythritol diphosphite
Adekastab 2112 (Asahi Denka Kogyo K.K.): tris-(2,4-di-t-butylphenyl) phosphite

### Weathering agents

Adekastab LA-31 (Asahi Denka Kogyo K.K.): 2,2'-methylenebis[4'-(1,1,3,3-tetramethylbutyl)-6-(2N-benzotriazol-2-yl)phenol]
Tinuvin 327 (Ciba-Geigy): 2-(2'-hydroxy-3',5'-di-t-butylphenyl)-5-chlorobenzotriazole
Tinuvin 328 (Ciba-Geigy): 2-(2'-hydroxy-3',5'-di-t-amylphenyl)benzotriazole
Tinuvin P (Ciba-Geigy): 2-(2'-hydroxy-5'-methylphenyl)benzotriazole
Tinuvin 234 (Ciba-Geigy): 2-(2'-hydroxy-3',5'-bis(α,α-dimethylbenzyl)phenylbenzotriazole

**Table 3**

| | Composition | | |
|---|---|---|---|
| | Cationic copolymer (B) (wt. %) | Heat stabilizer (wt. %) | Weathering agent (wt. %) |
| Example 13 | B-1 (7.5) | - | - |
| Example 14 | B-1 (7.5) | Sandstab P-EPQ (0.1) | - |
| Example 15 | B-1 (7.5) | Sandstab P-EPQ (0.1) | Adekastab LA-31 (0.1) |
| Example 16 | B-1 (7.5) | Sandstab P-EPQ (0.1) | Tinuvin 327 (0.1) |
| Example 17 | B-1 (7.5) | Adekastab PEP-8 (0.1) | Tinuvin 328 (0.1) |
| Example 18 | B-2 (7.5) | Adekastab 2112 (0.1) | Tinuvin P (0.1) |
| Example 19 | B-3 (7.5) | Sandstab P-EPQ (0.1) | Tinuvin 234 (0.1) |

**Table 4**

| | Before weather-o-meter test | | | After 500 hr weather-o-meter exposure | | |
|---|---|---|---|---|---|---|
| | (1) Antistatic property | (7) Weatherability | | (1) Antistatic property | (7) Weatherability | |
| | Surface resistance (Ω) | ΔYI | Total light transmittance (%) | Surface resistance (Ω) | ΔYI | Total light transmittance (%) |
| Example 13 | 7.21x10¹¹ | 4.3 | 94.7 | 8.00x10¹¹ | 7.5 | 82.8 |
| Example 14 | 6.62x10¹¹ | 2.3 | 94.5 | 8.00x10¹¹ | 5.4 | 87.0 |
| Example 15 | 6.80x10¹¹ | 2.1 | 93.8 | 7.72x10¹¹ | 3.0 | 92.6 |
| Example 16 | 8.02x10¹¹ | 2.3 | 93.5 | 7.95x10¹¹ | 3.7 | 91.9 |
| Example 17 | 6.45x10¹¹ | 2.6 | 92.6 | 7.73x10¹¹ | 3.5 | 91.8 |
| Example 18 | 6.81x10¹¹ | 3.0 | 93.3 | 7.05x10¹¹ | 3.7 | 92.1 |
| Example 19 | 6.57x10¹¹ | 2.2 | 93.8 | 6.75x10¹¹ | 3.2 | 92.0 |

It is clear from Table 4 that when a heat stabilizer and/or a weathering agent is used in combination with the cationic copolymer (B), not only antistatic property but also high thermal stability and weather resistance are obtained.

## Claims

1. A (meth)acrylate resin composition comprising
(A) a (meth)acrylate resin and
(B) a cationic copolymer comprising a linear arrangement of 80-98 mol % of an ethylene unit of formula (I) and 2-20 mol % of an acrylamide unit of formula (III) and having a weight average molecular weight of 1,000-50,000.
⁅CH₂ - CH₂⁆ (I) 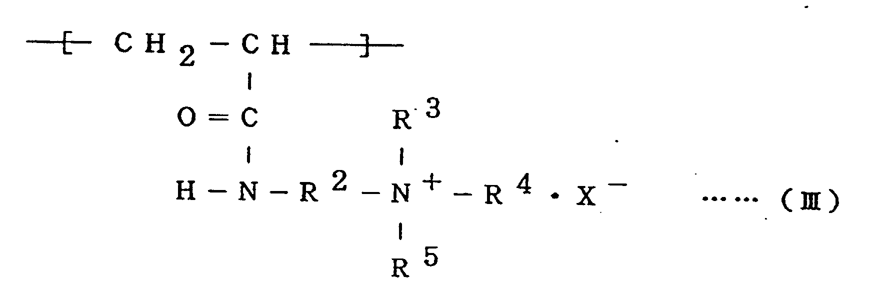
wherein R² represents an ethylene group or a propylene group; R³ and R⁴ each represents a methyl group; R⁵ represents a C₁₋₈ straight-chain alkyl or arylalkyl group; X⁻ represents a halide ion, CH₃OSO₃⁻, or CH₃CH₂OSO₃⁻; R² may be the same or different with different occurrences of the unit.

2. A (meth)acrylate resin composition comprising
(A) a (meth)acrylate resin and
(B) a cationic copolymer comprising a linear arrangement of 80-98 mol % of an ethylene unit of formula (I), not more than 15 mol % of an acrylate unit of formula (II), and 2-20 mol % of an acrylamide unit of formula (III) and having a weight average molecular weight of 1,000-50,000.
⁅CH₂ - CH₂⁆ (I) 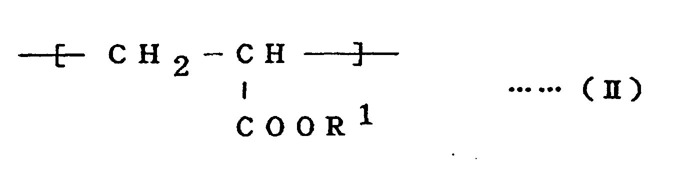 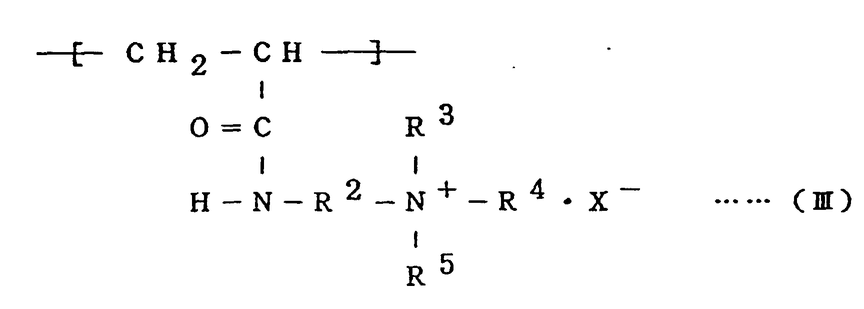
(wherein R¹ represents a methyl group or an ethyl group; R² represents an ethylene group or a propylene group; R³ and R⁴ each represents a methyl group; R⁵ represents a C₁₋₈ straight-chain alkyl or arylalkyl group; X⁻ represents a halide ion, CH₃OSO₃⁻ or CH₃CH₂OSO₃⁻; R¹ and R² each may be the same or different with different occurrences of the respective units.)

3. A (meth)acrylate resin composition according to claim 1 or 2 characterized in that it further contains a heat stabilizer and/or a weathering agent.

4. A shaped article characterized in that it is a three-dimensional article molded from the resin composition of any of the claims 1 to 3.

5. A method of improving the impact strength of an antistatic shaped article of claim 4 characterized by formulating the cationic copolymer (B) defined in any of the claims 1 to 3 with a (meth)acrylate resin (A) and molding the resulting composition.

## Patentansprüche

1. (Meth)acrylatharz-Zusammensetzung, enthaltend
(A) ein (Meth)acrylatharz und
(B) ein kationisches Copolymer, das eine lineare Anordnung von 80 bis 98 Mol-% einer Ethyleneinheit der Formel (I) und 2 bis 20 Mol-% einer Acrylamideinheit der Formel (III) umfaßt und ein Gewichtsmittel des Molekulargewichts von 1000 bis 50 000 hat
⁅CH₂ - CH₂⁆ (I) 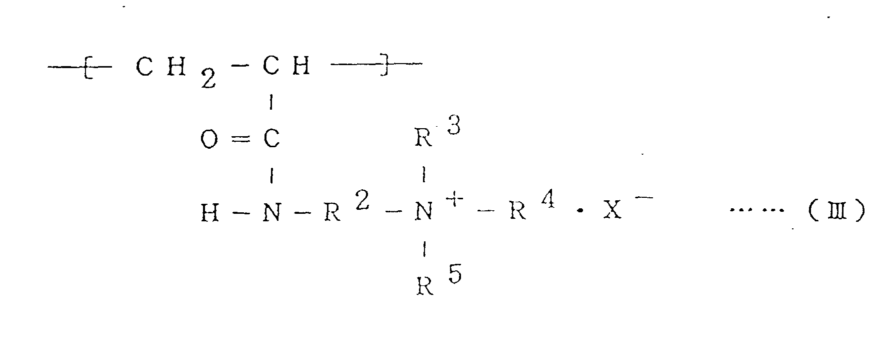
worin R² eine Ethylengruppe oder eine Propylengruppe bedeutet, R³ und R⁴ jeweils eine Methylgruppe darstellen; R⁵ eine geradekettige C₁₋₈-Alkyl- oder eine Aralkylgruppe bedeutet, X⁻ ein Halogenidion, CH₃OSO₃⁻ oder CH₃CH₂OSO₃⁻ bedeutet und R² bei verschiedenem Vorkommen der Einheit gleich oder verschieden sein kann.

2. (Meth)acrylatharz-Zusammensetzung, enthaltend
(A) ein (Meth)acrylatharz und
(B) ein kationisches Copolymer, das eine lineare Anordnung von 80 bis 98 Mol-% einer Ethyleneinheit der Formel (I), nicht mehr als 15 Mol-% einer Acrylateinheit der Formel (II) und 2 bis 20 Mol-% einer Acrylamideinheit der Formel (III) umfaßt und ein Gewichtsmittel des Molekulargewichts von 1000 bis 50 000 hat
⁅CH₂ - CH₂⁆ (I) 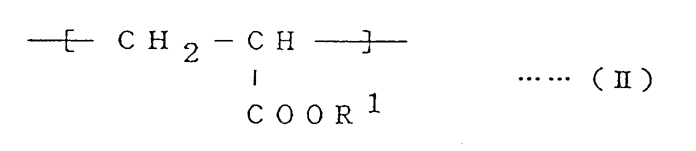 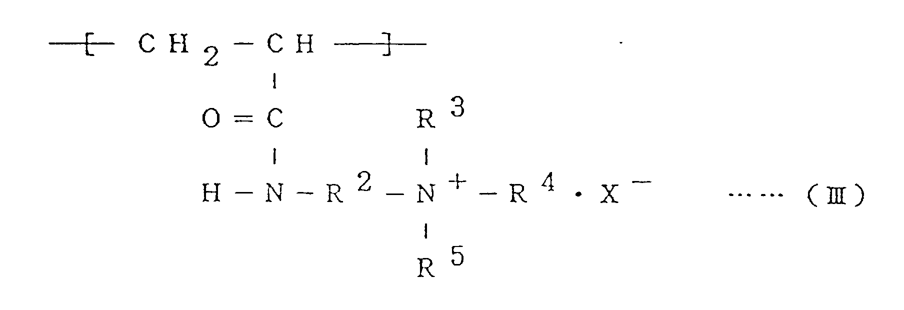
(worin R¹ eine Methylgruppe oder eine Ethylgruppe bedeutet, R² eine Ethylengruppe oder eine Propylengruppe bedeutet, R³ und R⁴ jeweils eine Methylgruppe bedeuten, R⁵ eine geradekettige C₁-C₈-Alkyl- oder eine Aralkylgruppe bedeutet, X⁻ ein Halogenidion, CH₃OSO₃⁻ oder CH₃CH₂OSO₃⁻ bedeutet, und R¹ und R² bei verschiedenem Vorkommen der jeweiligen Einheiten gleich oder verschieden sein können.

3. (Meth)acrylatharz-Zusammensetzung nach Anspruch 1 oder 2, dadurch gekennzeichnet, daß sie weiterhin einen Wärmestabilisator und/oder ein Verwitterungsschutzmittel enthält.

4. Formkörper, dadurch gekennzeichnet, daß er einen dreidimensionalen Gegenstand, der aus der Harzzusammensetzung nach einem der Ansprüche 1 bis 3 geformt ist, darstellt.

5. Verfahren zur Verbesserung der Schlagfestigkeit eines antistatischen Formkörpers gemäß Anspruch 4, dadurch gekennzeichnet, daß man das in einem der Ansprüche 1 bis 3 definierte kationische Copolymer (B) mit einem (Meth)acrylatharz vermischt und die gebildete Zusammensetzung verformt.

## Revendications

1. Composition de résine (méth)acrylate comprenant
(A) une résine (méth)acrylate et
(B) un copolymère cationique comprenant un arrangement linéaire de 80-98 % en moles d'une unité d'éthylène de formule (I) et 2-20 % en moles d'une unité d'acrylamide de formule (III), et ayant un poids moléculaire moyen de 1000-50 000,
⁅CH₂ - CH₂⁆ (I) 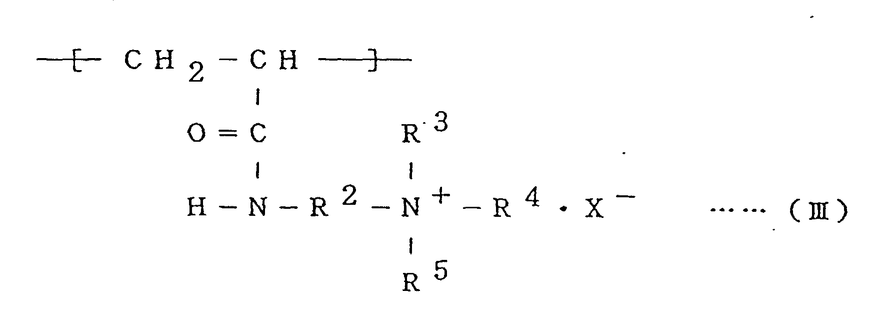
dans laquelle R² représente un groupe éthylène ou un groupe propylène ; R³ et R⁴ représentent chacun un groupe méthyle; R⁵ représente un groupe alkyle à chaîne linéaire en C₁₋₈ ou arylalkyle ; X⁻ représente un ion halogénure, CH₃OSO₃⁻ ou CH₃CH₂OSO₃⁻ ; R² peut être identique ou différent selon diverses occurences de l'unité.

2. Composition de résine (méth)acrylate comprenant
(A) une résine (méth)acrylate et
(B) un copolymère cationique comprenant un arrangement linéaire de 80-98 % en moles d'une unité d'éthylène de formule (I), pas plus de 15 % en moles d'une unité d'acrylate de formule (II) et 2-20 % en moles d'une unité d'acrylamide de formule (III), et ayant un poids moléculaire moyen en poids de 1000-50 000,
⁅CH₂ - CH₂⁆ (I) 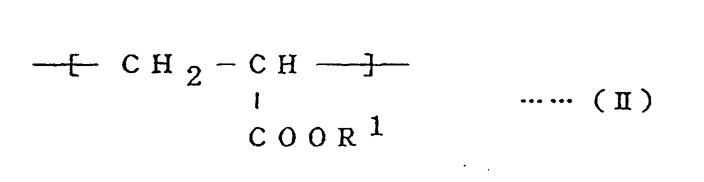 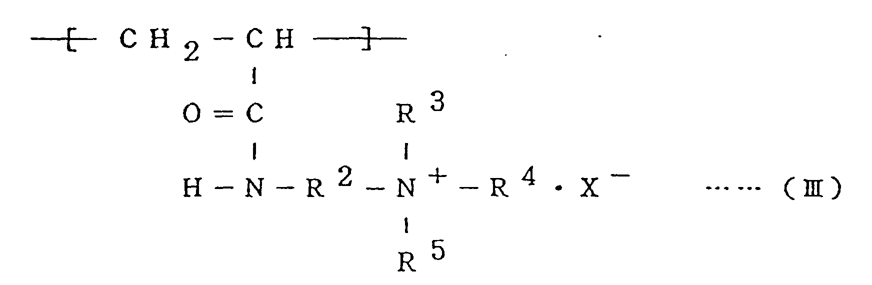
(dans laquelle R¹ représente un groupe méthyle ou un groupe éthyle ; R² représente un groupe éthylène ou un groupe propylène ; R³ et R⁴ représentent chacun un groupe méthyle ; R⁵ représente un groupe alkyle à chaîne linéaire en C₁₋₈ ou arylalkyle ; X⁻ représente un ion halogénure, CH₃OSO₃⁻ ou CH₃CH₂OSO₃⁻; R¹ et R² peuvent être chacun identique ou différent selon diverses occurences des unités respectives).

3. Composition de résine (méth)acrylate selon la revendication 1 ou 2, caractérisée par le fait qu'elle contient en outre un stabilisant thermique et/ou un agent de stabilité aux conditions atmosphériques.

4. Article moulé, caractérisé par le fait que c'est un article tridimensionnel, moulé à partir de la composition de résine selon l'une quelconque des revendications 1 à 3.

5. Procédé d'amélioration de la résistance au choc d'un article moulé antistatique selon la revendication 4, caractérisé en ce que l'on formule le copolymère cationique (B), défini selon l'une quelconque des revendications 1 à 3, avec une résine (méth)acrylate (A), et que l'on moule la composition obtenue.
